# FASCICULE DE BREVET EUROPEEN

(11) **EP 3 201 032 B1**
(45) Date de publication et mention de la délivrance du brevet: **14.04.2021**
(21) Numéro de dépôt: 15788136.8
(22) Date de dépôt: 02.10.2015
(51) Int. Cl.: B60K 17/10, B60K 17/356, F16H 61/431, F16H 61/47

(54) **PROCEDE DE COMMANDE D'UN DISPOSITIF DE TRANSMISSION HYDRAULIQUE D'UN VEHICULE**
VERFAHREN ZUR STEUERUNG DER HYDRAULIKGETRIEBEVORRICHTUNG EINES FAHRZEUGS
METHOD FOR CONTROLLING THE HYDRAULIC TRANSMISSION DEVICE OF A VEHICLE

(30) Priorité: 03.10.2014 FR 1459502
(43) Date de publication de la demande: 09.08.2017
(73) Titulaire: Poclain Hydraulics Industrie, 60410 Verberie (FR)
(72) Inventeur: DEPIERRE, Gery, F-60410 Verberie (FR); HOUILLON, Pierre-Louis, F-60410 Verberie (FR)
(74) Mandataire: Cabinet Beau de Loménie
(86) Numéro de dépôt international: PCT/FR2015/052648
(87) Numéro de publication internationale: WO 2016/051109

(56) Documents cités:
- EP-A2- 2 256 379
- WO-A1-2014/162103
- US-A1- 2005 164 827
- US-A1- 2011 048 829

## Description

La présente invention concerne un procédé de commande d'un dispositif de transmission d'un véhicule, le dispositif comprenant une transmission hydraulique ayant n moteurs hydrauliques, n étant supérieur ou égal à 1, et une pompe apte à être entraînée par un entraînement pour alimenter les moteurs hydrauliques en fluide.

On connaît, l'avantage d'une transmission hydraulique, qui permet de délivrer un fort couple, à des vitesses modérées.

La transmission hydraulique peut être la transmission principale du véhicule ou être une transmission d'assistance, associée à une transmission mécanique principale. Par exemple, le brevet européen EP 0 993 982 divulgue l'utilisation combinée d'une transmission hydraulique et d'une transmission mécanique. Dans ce cas, la transmission hydraulique est utilisée dans des conditions particulières, en particulier pour réaliser une assistance de la transmission mécanique dans des conditions de circulation qui le nécessitent, par exemple en cas de perte d'adhérence d'au moins l'une des roues du véhicule lorsqu'il circule sur un terrain glissant tel que celui d'un chantier de construction.

Qu'elle soit la transmission principale ou une transmission d'assistance, la transmission hydraulique peut être utilisée dans des conditions de circulation difficiles. Dans certains cas, elle doit être utilisée à très basse vitesse, par exemple lorsque le véhicule circule sur un terrain particulièrement glissant ou accidenté, notamment pour franchir un obstacle tel qu'un dos d'âne ou une bordure de trottoir, ou bien pour sortir d'une ornière, notamment dans la boue. Dans une telle situation, la transmission hydraulique doit délivrer un couple significatif et entrainer les roues à une vitesse très faible, mais suffisante pour permettre au véhicule de circuler et, le cas échéant, de passer l'obstacle.

La vitesse de sortie des moteurs hydrauliques est fonction du débit de la pompe, c'est-à-dire du produit de la vitesse d'entraînement de la pompe par sa cylindrée. Par exemple, on utilise une pompe à cylindrée continûment variable et c'est donc en faisant varier cette cylindrée qu'on fait varier le débit de refoulement de la pompe. Lorsque la transmission hydraulique est une transmission d'assistance, l'entraînement de la pompe peut être le moteur d'entraînement de la transmission mécanique.

Ainsi, en principe, en connaissant la cylindrée des moteurs, on règle leur vitesse de sortie sur une valeur cible en fixant le débit de la pompe à une valeur cible ce qui, à vitesse d'entrainement donnée de la pompe, revient à fixer la cylindrée de la pompe à une cylindrée cible. C'est par exemple ce qui est fait classiquement pour une transmission hydraulique d'assistance, lorsqu'il s'agit de fournir par cette assistance un couple d'assistance de la transmission mécanique et donc, de faire en sorte que la vitesse de sortie des moteurs hydrauliques attelés aux roues du véhicule soit cohérente avec la vitesse donnée par la transmission mécanique (elle peut être égale à cette vitesse ou, au contraire, être légèrement supérieure ou légèrement inférieure, selon que l'on souhaite obtenir un effet d'assistance positive ou de retenue). Ceci est par exemple décrit dans la demande de brevet français n° FR 1 353 043 non pré-publiée (voir demande de brevet internationale n° WO2014/162103, publiée le 9 octobre 2014). Ceci fonctionne bien à des vitesses suffisantes, par exemple de l'ordre de 5 à 30km/h.

Cependant, dans certains cas, l'information relative à la vitesse donnée par la transmission mécanique peut ne pas être fiable, ou être indisponible, ou encore n'être disponible que trop tardivement pour pouvoir être valablement prise en compte. C'est en particulier le cas lorsque le véhicule circule à très basse vitesse (en particulier une vitesse de l'ordre de 5km/h ou moins), ou bien pendant des manœuvres, ou encore lorsque l'on fait circuler le véhicule en mode de fonctionnement « avant-arrière », en faisant alternativement fonctionner les moteurs en marche avant et en marche arrière pour faire alternativement avancer et reculer les roues du véhicule, en particulier pour le franchissement d'un obstacle. Ceci est notamment dû au fait que les capteurs de vitesse classiquement utilisés, du type capteurs de rotation à encoches ou codeurs à impulsions ne sont pas fiables dans de telles conditions, en raison de l'écart entre les encoches ou entre les impulsions.

De plus, dans tout composant hydraulique, en particulier dans un moteur hydraulique, il existe inévitablement des fuites. Les circuits sont évidemment dimensionnés pour en tenir compte et, en fonctionnement normal, en particulier dans la plage de vitesses précitée, ces fuites ont un impact assez négligeable. Cependant, leur effet est nettement plus sensible à très basse vitesse, en particulier pour une vitesse inférieure à 5km/h, par exemple de l'ordre de 2km/h, voire 1km/h. En effet, lorsque les moteurs fonctionnent à très basse vitesse tout en étant soumis à des différences de pressions élevées à leurs bornes, le taux de fuite peut devenir significatif et avoir notamment un impact sur la vitesse de sortie des moteurs. Il en résulte que la vitesse réelle des roues du véhicule peut ne pas être stable et varier par rapport à la vitesse cible. Par exemple, lorsque le véhicule doit franchir un obstacle en montée (butte, bordure de trottoir, sortie d'une ornière), les moteurs hydrauliques peuvent fuir de manière significative, et la vitesse réelle du véhicule peut alors diminuer de manière significative à mesure qu'il monte sur l'obstacle. Le franchissement de l'obstacle peut alors être laborieux.

US2011048829 divulgue un procédé de commande d'une transmission de véhicule comprenant un moteur hydraulique alimenté par une pompe, dans lequel on règle la pompe en fonction d'une vitesse cible, on détermine une vitesse réelle, puis on corrige le réglage de la pompe en fonction de la différence entre la vitesse réelle et la vitesse cible.

L'invention vise à améliorer cet état de la technique en faisant en sorte que, même à très faible vitesse et en particulier lors du franchissement d'obstacles, la vitesse de sortie des moteurs hydrauliques soit plus stable.

Ce but est atteint grâce au procédé selon la revendication 1.

Ainsi, dans un premier temps, on détermine le débit de la pompe, par le réglage de la pompe, lequel est défini par le couple de paramètres « cylindrée de la pompe » et « vitesse d'entraînement », pour obtenir en théorie la vitesse cible souhaitée. La vitesse théorique des n moteurs hydrauliques est la vitesse à laquelle ils devraient normalement fonctionner en étant alimentés avec ce débit cible, en fonction de leurs cylindrées. Cette vitesse cible correspond donc à un régime théorique de fonctionnement des moteurs. Cependant, en fonction de la configuration du terrain sur lequel circule le véhicule, en particulier en fonction de la pente (relief de l'obstacle à franchir), le régime réel des moteurs peut être tel qu'ils s'écartent de la vitesse cible souhaitée. Ainsi, la vitesse de sortie réelle des moteurs peut s'écarter de la vitesse théorique. Selon l'invention, on modifie la cylindrée de la pompe sur la base de la pression de fluide à l'alimentation et/ou à l'échappement des moteurs, en fonction d'une table de correction tenant compte du rendement volumétrique des moteurs hydrauliques. Le décalage entre le régime réel des moteurs et la vitesse cible, peut en particulier être lié aux fuites dans le circuit hydraulique, en particulier dans certains de ces composants, en particulier dans les moteurs hydrauliques. La modification de la cylindrée de la pompe permet de compenser ces fuites, en particulier en augmentant cette cylindrée, de manière à augmenter le débit de la pompe. La pompe étant entrainée par l'entrainement à une vitesse d'entrainement, on règle son débit en modifiant sa cylindrée.

Le poste de commande du véhicule peut comprendre une interface (bouton de commande ou analogue) permettant l'activation de la fonction « contrôle basse vitesse » ou « franchissement d'obstacle », l'activation de cette fonction déclenchant le procédé de commande selon l'invention. On peut faire cesser l'exécution de cette fonction par une commande inverse sur l'interface, ou bien automatiquement par exemple lorsqu'une vitesse de véhicule supérieure à une vitesse plafond d'activation de cette fonction est demandée, par exemple via une commande d'accélération telle qu'une pédale d'accélérateur ou un joystick.

Selon l'invention, on détecte la pression de fluide à l'alimentation et/ou à l'échappement des moteurs hydrauliques, et on modifie la cylindrée de la pompe en fonction d'une table de correction tenant compte du rendement volumétrique des moteurs hydrauliques pour que la vitesse de sortie réelle des moteurs hydrauliques se rapproche de la vitesse cible.

La pression s'établit d'elle-même dans le circuit et elle est détectée par la détection de la pression à l'alimentation et/ou à l'échappement des moteurs.

La table de correction tient compte du rendement volumétrique des moteurs, c'est-à-dire du rapport entre le débit réel et le débit théorique, pour différentes pressions. En d'autres termes, la table de correction donne les grilles de valeurs Pression, Débit réel, Débit théorique. Cette table est établie sur la base de mesures des débits d'entrée et de sortie des moteurs, pour différentes pressions, faites en usine sur des moteurs tests. De manière générale, les fuites pouvant aussi se produire dans d'autres composants hydrauliques du circuit que les moteurs hydrauliques, cette table peut être établie pour l'ensemble de ces composants, c'est-à-dire pour l'ensemble du circuit d'alimentation des moteurs, entre la sortie haute pression de la pompe et le refoulement des moteurs. Elle peut également être établie pour les composants essentiels du circuit. Elle peut être établie en usine sur un circuit test.

Ainsi, si le véhicule doit franchir un obstacle en montée, le débit réel sortant des moteurs est inférieur au débit théorique (débit cible) en raison des fuites. On détecte sur la table de combien doit être corrigée la cylindrée de pompe (dans le cas d'un obstacle en montée, elle doit être augmentée) pour que le débit réel se rapproche le plus possible du débit cible initial, ce qui permet que la vitesse de sortie des moteurs hydrauliques soit effectivement sensiblement égale à la vitesse cible.

Optionnellement, on calcule la vitesse théorique du véhicule sur la base de la vitesse cible de sortie des moteurs hydrauliques, on compare ladite vitesse théorique à la vitesse réelle du véhicule et, sur la base de cette comparaison, on modifie la cylindrée de la pompe pour que la vitesse réelle soit sensiblement égale à la vitesse théorique.

Par « sensiblement égale » on entend que la vitesse réelle peut tout au plus s'écarter faiblement de la vitesse théorique, par un écart jugé acceptable dans les conditions de circulation. Par exemple, cet écart est de l'ordre de 10%, voire 5% ou moins.

Dans ce cas, le paramètre révélateur du régime réel de fonctionnement des moteurs hydrauliques est la vitesse réelle du véhicule. La vitesse réelle du véhicule peut être mesurée par tout moyen approprié, par exemple via un capteur de vitesse de rotation d'une ou de plusieurs roues, de résolution suffisamment fine, ou encore un système de type GPS pour « Global Positioning System »).

Dans ce cas, on réalise un asservissement en vitesse, en amenant directement la vitesse réelle mesurée à une valeur sensiblement égale à la vitesse théorique. Plus précisément, on réalise une boucle de rétroaction en vitesse, en modifiant la cylindrée de la pompe sur la base de la vitesse réelle détectée, afin que cette vitesse soit sensiblement égale à la vitesse théorique.

Ainsi, on réalise d'abord une première correction du réglage de la pompe à partir de la table de correction, pour rapprocher la vitesse de sortie réelle de la vitesse cible. Le degré de rapprochement est plus ou moins fin, en fonction de la finesse de l'incrément des pressions dans la table. Pour rapprocher encore davantage la vitesse réelle de la vitesse théorique, on peut réaliser ensuite la comparaison des vitesses théorique et réelle précitée, et on modifie la cylindrée de la pompe pour ajuster la vitesse réelle du véhicule.

Optionnellement, on détermine la vitesse cible en fonction du degré d'actionnement d'une commande de vitesse.

Cette commande, actionnée par le conducteur du véhicule, peut être une commande d'accélération du véhicule, telle qu'une pédale d'accélérateur, un joystick, une interface de commande telle qu'un potentiomètre ou encore un système de contrôle de vitesse de type « cruise control ». De manière générale, la commande de vitesse est tout moyen approprié pour assigner au véhicule une vitesse cible de circulation.

Optionnellement, on met en œuvre un mode de fonctionnement « avant-arrière » dans lequel, on inverse alternativement le sens de refoulement de la pompe pour faire alternativement fonctionner les moteurs hydrauliques en marche avant et en marche arrière.

Cette inversion du sens de refoulement de la pompe permet de faire alternativement avancer et reculer les roues du véhicule, notamment pour faciliter le franchissement d'un obstacle, en particulier pour sortir d'un trou ou d'une ornière, ou bien pour franchir une bordure de trottoir. L'inversion du sens d'entraînement peut se faire à intervalles rapides et réguliers, par exemple de l'ordre de 2s. Elle peut se faire sans changement de la cylindrée de la pompe, en changeant son sens d'entraînement. Elle peut également se faire sans changer le sens d'entraînement de la pompe mais en inversant sa cylindrée, en particulier, en inversant l'inclinaison de son plateau-came lorsqu'il s'agit d'une pompe à plateau-came.

Optionnellement, on émet un signal révélateur d'une anomalie de motricité du véhicule pouvant justifier la mise en œuvre du mode « avant-arrière ». Optionnellement, on met automatiquement en œuvre le mode « avant-arrière » sur la base dudit signal.

Ce signal peut alerter le conducteur sur le fait que le véhicule se trouve confronté à un obstacle très difficilement franchissable dans les conditions normales de motricité du véhicule, ce qui justifie la mise en œuvre du mode « avant-arrière ». Le mode « avant-arrière » peut d'ailleurs être automatiquement déclenché sur la base dudit signal. Alternativement, le signal peut servir à alerter le conducteur, qui peut alors lui-même déclencher le mode « avant-arrière » via une interface de commande appropriée. Le signal peut donc comprendre un signal d'instruction à une unité de commande électronique ou un signal d'alerte, en particulier sonore ou visuel. Il peut à la fois comporter un signal d'instruction et un signal d'alerte, pour mettre automatiquement en marche le mode « avant-arrière », tout en informant le conducteur de cette mise en marche.

Optionnellement, le dispositif de transmission comprenant une transmission mécanique reliée à un moteur d'entrainement via un embrayage, on assure l'entrainement de la pompe par ledit moteur d'entrainement.

Optionnellement, on met en œuvre ledit procédé de commande lorsque le moteur d'entrainement est débrayé de la transmission mécanique.

Comme indiqué précédemment, la transmission hydraulique peut être la transmission principale ou une transmission d'assistance. Dans ce dernier cas, on peut prévoir que le franchissement d'un obstacle soit réalisé en entraînant le véhicule par la seule transmission hydraulique. Pour cela, le poste de commande du véhicule peut comprendre une interface (bouton de commande ou analogue) permettant l'activation de la fonction « franchissement d'obstacle » ou « contrôle basse vitesse ». L'activation de cette fonction peut alors, d'une part, déclencher le procédé de commande selon l'invention et, d'autre part, débrayer la transmission mécanique ou placer sa boîte de vitesse au neutre, pendant tout ou partie de l'exécution de cette fonction. Lorsque la transmission mécanique est ainsi inactivée, ou en l'absence d'une transmission mécanique, le conducteur du véhicule peut choisir le sens de circulation du véhicule (marche avant/ marche arrière) par une commande adaptée, par exemple un bouton ou analogue.

L'invention sera bien comprise et ses avantages apparaîtront mieux à la lecture de la description détaillée qui suit, de modes de réalisation illustrés à titre d'exemples non limitatifs. La description se réfère aux dessins annexés sur lesquels :
- la figure 1 est une vue schématique d'un dispositif de transmission d'un véhicule permettant la mise en œuvre du procédé selon l'invention ;
- la figure 2 est un organigramme illustrant l'exécution du procédé de commande selon une deuxième phase optionnelle de réalisation de l'invention ; et
- la figure 3 est un organigramme illustrant l'exécution du procédé de commande selon l'invention.

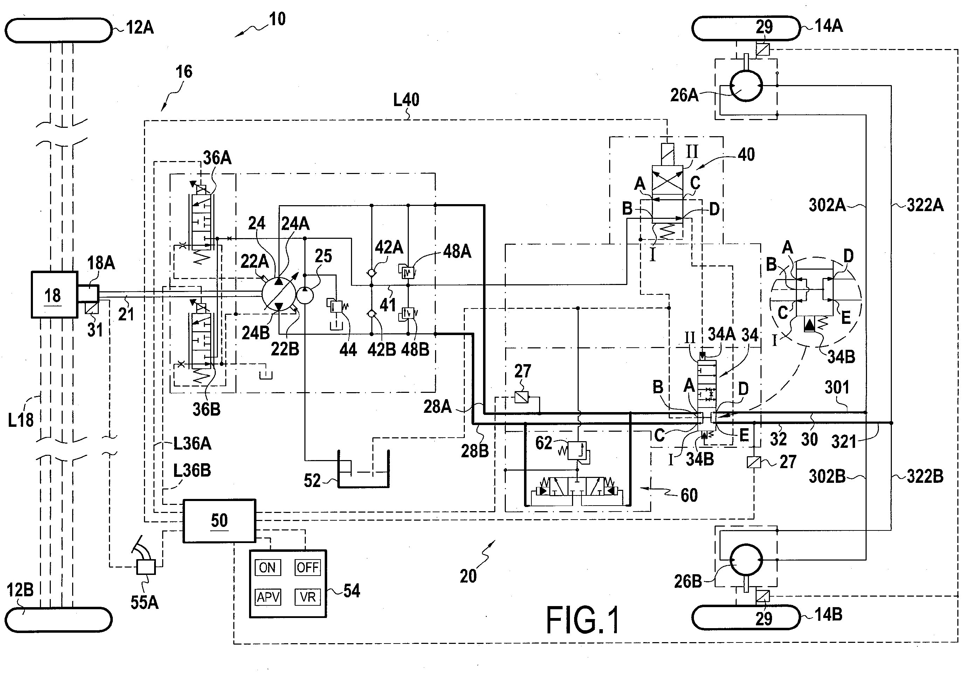

La figure 1 représente un dispositif de transmission d'un véhicule 10 ayant deux roues arrière 12A, 12B, et deux roues avant 14A, 14B. L'entraînement du véhicule est assuré en régime normal par une transmission mécanique 16, qui est la transmission principale. Cette transmission mécanique relie un moteur d'entraînement 18 aux roues 12A et 12B (par exemple les roues arrière), et assure ainsi seule l'entraînement du véhicule la plupart du temps.

Le moteur 18 est relié à la transmission mécanique 16 par un embrayage 18A. Il peut être un moteur à combustion interne (à essence, GPL, ou autres...), ou bien un autre type de moteur, tel qu'un moteur électrique ou autre.

Outre la transmission mécanique, le dispositif de transmission comprend une transmission hydraulique 20 qui est généralement activée à titre d'assistance, pour assurer la propulsion du véhicule dans des conditions de route difficiles (route en pente ou déclive, route glissante, etc.) ou, conformément à l'invention, pour l'aide au démarrage du véhicule. Cette transmission hydraulique permet en effet de rendre motrices les deux roues 14A et 14B, qui ne sont pas entraînées par la transmission mécanique. Ainsi grâce à la transmission hydraulique 20, le véhicule dispose de modes de fonctionnement dans lesquels les quatre roues 12A, 12B, 14A et 14B sont motrices.

Bien que dans ce mode de réalisation, l'assistance hydraulique soit appliquée aux roues avant 14A et 14B, elle pourrait tout aussi bien être appliquée à des roues arrière.

La transmission hydraulique 20 est couplée à un arbre 21 qui est lié à la sortie de puissance du moteur 18, duquel elle tire l'énergie qu'elle transmet aux roues 14A, 14B lorsqu'elle est activée.

Plus précisément, la transmission hydraulique comprend une pompe 24 qui est reliée à l'arbre de sortie 21 du moteur d'entraînement 18 de manière à être entraînée par ce dernier. Cette pompe 24, également dénommée ci-après « pompe principale », sert à l'alimentation des moteurs hydrauliques 26A et 26B qui sont respectivement attelés aux roues 14A et 14B.

La pompe principale 24 est de type à cylindrée variable, en particulier une pompe réversible à débit variable, du type à plateau-came oscillant, dont l'orientation fait varier la cylindrée de la pompe.

Dans l'exemple représenté, la transmission hydraulique comprend également une pompe auxiliaire 25 ou pompe de gavage qui, de manière connue en soi, sert à maintenir une pression minimale de gavage dans les composants du circuit de manière à éviter les phénomènes de cavitation. La pompe 25 a une cylindrée fixe, sa pression de refoulement étant limitée par le limiteur de pression 44 de manière à maintenir la pression de gavage P_{G}, par exemple de l'ordre de 30 bar, dans une conduite de gavage 41.

Les pompes principale 24 et auxiliaire 25 sont reliées toutes les deux à l'arbre de sortie 21 du moteur 18, et sont donc actionnées conjointement par celui-ci. Optionnellement, les pompes principale et auxiliaire peuvent également être entraînées par deux arbres séparés, ou le gavage auxiliaire peut être assuré par un groupe électropompe.

Le circuit de transmission hydraulique comprend deux conduites de pompe 28A, 28B, reliées aux orifices principaux 24A, 24B de la pompe 24. Selon le sens de fonctionnement de la pompe 24, ces conduites de pompe assurent respectivement l'alimentation en fluide des moteurs hydrauliques et l'échappement, ou inversement.

En effet, via une valve d'activation 34, ces conduites de pompe 28A, 28B peuvent être mises en communication respectivement avec deux conduites de moteur 30, 32. Chacune de ces conduites de moteur a une première partie 301, 321 apte à être reliée à une conduite de pompe, et une deuxième partie dans laquelle elles se divisent chacune en deux branches 302A,302B, et 322A,322B respectivement, reliées à des enceintes d'alimentation et d'échappement des moteurs 26A et 26B, c'est-à-dire aux bornes de ces moteurs.

La pression dans celle des conduites de pompe 28A, 28B dont la pression est la plus faible est limitée par une valve d'échange 60 associée à un limiteur de pression 62 relié à un réservoir sans surpression (à la pression atmosphérique) 52, de manière à maintenir, dans la conduite de pompe à la plus basse pression, une pression égale à la pression de tarage du limiteur de pression 62, par exemple de l'ordre de 22 bar.

On notera que dans la transmission hydraulique 20, la valve d'échange 60 est optionnelle.

De manière connue en soi, les moteurs 26A, 26B sont en particulier des moteurs hydrauliques à pistons radiaux, similaires aux moteurs décrits par exemple dans le brevet français n°2 504 987.

Ces moteurs peuvent être engagés ou désengagés (embrayés ou débrayés), en particulier en faisant varier la pression régnant dans leurs carters, par exemple comme indiqué dans le brevet européen n° 0 993 982.

Cependant, d'autres types de moteurs hydrauliques, par exemple des moteurs à pistons axiaux, pourraient être prévus.

Chacun des moteurs 26A, 26B comporte un arbre de sortie, relié respectivement aux roues 14A, 14B. En mode moteur de la transmission hydraulique 20, sous l'effet de la différence de pression imposée par la pompe principale entre les conduites de pompe, et donc entre les conduites de moteur, les moteurs 26A et 26B délivrent un couple moteur qui leur permet d'entraîner les roues 14A, 14B.

Dans le cas où la différence de pression imposée par la pompe principale s'inverse entre les conduites de pompe, et donc entre les conduites de moteur (la pression à l'orifice de refoulement de la pompe 24A étant alors inférieure à la pression à son orifice d'alimentation 24B), la transmission hydraulique 20 est inversement en mode de freinage, et les moteurs 26A et 26B délivrent un couple de retenue qui tend à freiner les roues 14A, 14B. La fonction générale de la valve d'activation 34 est d'activer ou de désactiver la transmission hydraulique 20 :
- en mode désactivé, seule la transmission mécanique sert à l'entraînement du véhicule ; et
- en mode activé, la transmission mécanique et la transmission hydraulique peuvent entraîner conjointement le véhicule. Cependant dans ce mode, la transmission hydraulique 20 peut par moments être inactive (ou débrayée) et les moteurs ne délivrer aucun couple, à savoir lorsque le dispositif est opéré dans un mode sans couple qui sera décrit dans la suite. Par ailleurs, on peut envisager un mode de fonctionnement, dans lequel la transmission hydraulique est activée seule pour la réalisation d'un événement donné, tel que le passage de vitesses ou pour un entraînement à vitesse très faible, par exemple pour le franchissement d'un obstacle. La transmission mécanique est alors momentanément débrayée.

La valve 34 présente trois voies amont A, B, C, deux voies aval D et E, et deux positions I et II. Une position intermédiaire occupée de manière seulement transitoire est également représentée sur la figure 1.

La valve d'activation 34 comporte en outre deux chambres de commande hydraulique 34A, 34B.

Dans ce texte, les termes 'amont' et 'aval' appliqués aux voies d'une valve désignent en général le sens le plus fréquent de circulation du fluide ou de transmission d'une commande, sans que cela n'exclue d'autres modes de fonctionnement.

Les voies A et C sont reliées respectivement aux conduites de pompe 28A et 28B. La voie B est reliée au réservoir 52.

Les voies D et E sont reliées respectivement aux premières parties 301 et 321 des conduites de moteur 30 et 32, et ainsi sont reliées respectivement aux orifices d'alimentation et d'échappement des moteurs 26A et 26B.

Les chambres de commande 34A et 34B sont reliées respectivement aux voies C et D d'une valve de commande 40, en l'espèce une électrovalve, qui va être décrite plus loin.

La valve d'activation 34 comporte en outre un ressort de rappel qui tend à la maintenir dans la première position I.

Dans la première position I, les voies B, D et E sont reliées, et les voies A et C sont reliées. Dans la deuxième position II, les voies A et D sont reliées, les voies C et E sont reliées, et la voie B est isolée.

Comme le montre la case intermédiaire représentée sur la figure 1 pour la valve 34, en position intermédiaire entre les positions I et II, les quatre voies A, C, D et E sont reliées via des restrictions, la voie B étant au contraire isolée.

Ainsi, en première position I de la valve 34, les conduites de pompe 28A, 28B sont reliés l'une à l'autre (position de bipasse). De plus, les conduites de moteur 30 et 32 sont reliées l'une à l'autre, tout en étant reliées au réservoir 52. Les moteurs 26A et 26B sont donc inactifs. Ils peuvent alors être débrayés, c'est-à-dire mis en situation de roue libre, de différentes manières.

Par exemple, les pistons peuvent être rétractés dans leurs cylindres, comme décrit dans le brevet européen n° 0 993 982. On peut également envisager de désengager les rotors des moteurs par rapport à leurs organes de sortie. Par exemple, l'engagement entre les rotors et les organes de sortie s'opère par des crabots ou par friction, et le désengagement consiste à faire cesser la coopération des crabots ou à diminuer la friction.

En deuxième position II de la valve 34, les conduites de moteurs sont reliées aux conduites de pompe et alimentent les moteurs 26A, 26B pour qu'ils entraînent les roues 14A, 14B. Cette position correspond à l'état activé de la transmission hydraulique 20.

L'alimentation en fluide de cette transmission 20 se fait de la manière suivante.

Lorsque la pompe principale 24 est entraînée par le moteur d'entraînement 18, le fluide circule dans les conduites de pompes 28A et 28B, dans le sens de l'alimentation à partir de la pompe pour l'une et dans le sens du refoulement vers la pompe pour l'autre.

Les conduites de pompe 28A, 28B sont reliées à la conduite de gavage 41 via des clapets anti-retour 42A, 42B pour que la pression dans ces conduites reste au moins égale à la pression de gavage P_{G}, et via des limiteurs de pression 48A, 48B pour éviter toute surpression.

L'électrovalve de commande 40 permet de placer la transmission hydraulique 20 en mode activé ou en mode désactivé.

Cette électrovalve 40 présente deux voies amont A, B, deux voies aval C et D, deux positions I, II, et un ressort de rappel qui tend à la maintenir dans sa position I.

La voie A est reliée au réservoir 52. La voie B est reliée au conduit de gavage 41. Les voies C et D sont reliées aux chambres de commande 34A et 34B de la valve 34.

En position I de l'électrovalve 40, ses voies A et C sont reliées entre elles et ses voies B et D sont reliées entre elles, de sorte que la chambre de commande 34B est alimentée par la conduite de gavage 41, tandis que la chambre de commande 34A est reliée au réservoir. Il en résulte que la valve 34 est placée dans sa position I représentée sur la figure 1, dans laquelle les conduites de moteur 30 et 32 sont isolées des conduites de pompe, de sorte que la transmission hydraulique n'est pas active. En position II de l'électrovalve 40, ses voies A et D sont reliées entre elles et les voies B et C sont reliées entre elles, de sorte que c'est cette fois la chambre 34A qui est alimentée et la chambre 34B qui est reliée au réservoir, ce qui place la valve 34 dans sa position II, ce qui relie les conduites de moteur aux conduites de pompe et active donc la transmission hydraulique.

On a indiqué précédemment que la pompe 24 est à cylindrée variable. Pour faire varier cette cylindrée, la transmission hydraulique comprend deux électrovalves progressives de commande, 36A et 36 qui peuvent être déplacées entre deux positions extrêmes, dans lesquelles elles relient au réservoir l'une des chambres de commande 22A, 22B du plateau-came de la pompe 24 et relient l'autre de ces chambres à la conduite de gavage 41.

La transmission hydraulique 20 est commandée par une unité de commande électronique 50, qui est reliée aux différentes électrovalves et aux différents capteurs de cette transmission 20 par des circuits seulement partiellement représentés.

L'unité de commande est reliée à une interface utilisateur 54, qui permet au conducteur du véhicule d'activer ou de désactiver la transmission hydraulique 20. Cette interface peut permettre divers modes de fonctionnement :
- transmission hydraulique activée pour permettre une assistance hydraulique du moteur d'entraînement en situation de conduite « normale » du véhicule (bouton ON),
- transmission hydraulique totalement désactivée pour que le véhicule ne soit entraîné que par la transmission mécanique (bouton OFF),
- transmission hydraulique partiellement activée, c'est-à-dire ne s'activant que lorsqu'un besoin d'assistance est détecté (Bouton APV),
- transmission hydraulique activée en mode « contrôle basse vitesse » ou « franchissement d'obstacle » (bouton VR).

Le mode « partiellement activée » peut avoir plusieurs utilisations, par exemple pour permettre l'assistance hydraulique comme aide au passage des vitesses.

L'invention s'intéresse plus particulièrement au mode « contrôle basse vitesse », dans lequel la transmission hydraulique est utilisée seule, et qui permet de maintenir une vitesse stable même à vitesse très réduite, par exemple pour le franchissement d'un obstacle.

L'unité de commande 50 est reliée à l'électrovalve 40 par une ligne de commande L40, afin de commander cette électrovalve dans sa position I, dans laquelle la transmission hydraulique est inactive, ou dans sa position II, dans laquelle la transmission hydraulique est active.

Par des lignes de commande L36A et L36B, l'unité de commande 50 commande également les électrovalves 36A et 36B pour commander la cylindrée de la pompe principale 24.

L'unité de commande 50 contrôle l'activation et la désactivation de la transmission hydraulique 20 en commandant l'électrovalve 40 soit dans sa position II, ce qui place valve 34 dans sa position II et provoque l'activation de la transmission hydraulique, soit sans sa position I, qui place la valve 34 dans sa position I et provoque l'inactivation de la transmission hydraulique.

Lorsque la transmission hydraulique est activée, les moteurs 26A et 26B passent de leur configuration de roue libre à une configuration active, permettant ainsi à ces moteurs de délivrer un couple de sortie (mais, ainsi qu'on le verra, un mode de fonctionnement sans couple est également possible). Par exemple, la pression de fluide dans les conduites de moteur provoque la sortie des pistons de leurs cylindres, ou bien, éventuellement via une conduite d'activation non représentée, l'engagement des rotors des moteurs avec leurs organes de sortie.

Lorsque la transmission hydraulique est désactivée, par exemple pour faire cesser l'aide au démarrage, les moteurs hydrauliques passent dans leurs configurations de roue libre par un processus inverse.

On voit encore sur la figure 1 que le dispositif comprend un capteur de position 55A qui est lié à la pédale d'accélération et transmet l'information qu'il acquiert à l'unité de commande 50. Ce capteur sert en l'occurrence à transmettre à l'unité de commande 50 l'information de la vitesse souhaitée par le conducteur du véhicule qui, comme on l'a indiqué, peut être utilisée pour déterminer la vitesse cible. Comme on l'a également indiqué, cette information peut également servir à sortir automatiquement du mode « contrôle basse vitesse ». Bien entendu, l'information sur la vitesse souhaitée pourrait être acquise par tout autre moyen approprié, ainsi qu'il a été indiqué.

Sur la figure 1, le dispositif comporte encore des capteurs de pression 27 respectivement disposés sur la conduite de pompe 28A et sur la conduite de moteur 32 ce qui revient au même puisque, lorsque la valve 34 est dans sa position active II, la conduite de pompe 28A est reliée à la conduite de moteur 30. Les capteurs 27 sont reliés à l'unité de commande 50, à laquelle ils fournissent les pressions P_{A} et P_{B} régnant respectivement aux bornes des moteurs hydrauliques.

Dans l'exemple représenté, le dispositif comprend également des capteurs de vitesse 29, qui mesurent la vitesse de sortie des moteurs hydrauliques ou celle des roues qu'ils entrainent et sont reliés à l'unité de commande 50. Ces capteurs servent à connaître la vitesse réelle du véhicule, sachant que d'autres moyens pourraient être utilisés à cette fin, tels qu'un système de type GPS.

En outre, un capteur 31 permet de connaître la vitesse d'entraînement de la pompe principale 24, sachant encore que cette vitesse pourrait être connue par tout autre moyen approprié.

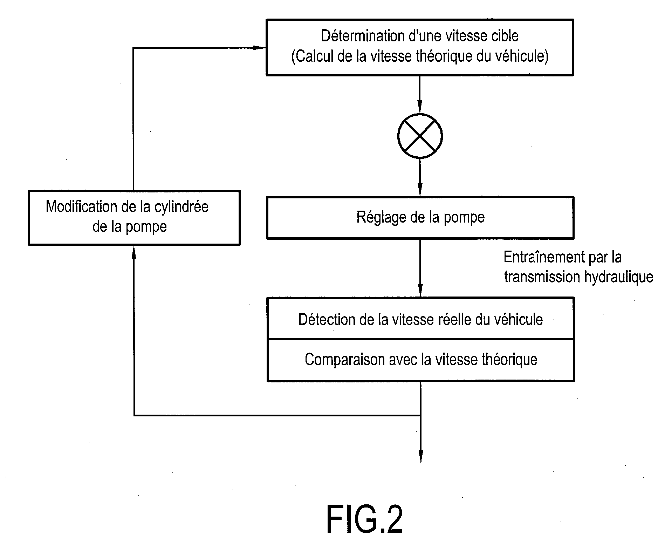

On décrit maintenant la figure 2 qui illustre l'exécution d'une phase optionnelle du procédé de commande de l'invention, une fois que le mode « contrôle basse vitesse » a été activé, par exemple via le bouton VR de l'interface 54.

Tout d'abord, on détermine la vitesse cible des moteurs hydrauliques. Par exemple via l'information de vitesse souhaitée reçue du capteur 55A, la vitesse théorique du véhicule est déterminée comme étant la vitesse souhaitée par le conducteur, et la vitesse cible des moteurs hydrauliques est déterminée sur la base de cette vitesse théorique du véhicule, en tenant compte du diamètre des roues du véhicule attelées aux moteurs hydrauliques et d'un éventuel rapport de réduction ou de multiplication entre les sorties de ces moteurs et ces roues.

Ensuite, sur la base de cette vitesse cible des moteurs hydrauliques, on détermine les paramètres de réglage de la pompe 24 et on effectue le réglage en fonction de ces paramètres. Ce réglage peut être opéré par le choix des paramètres « vitesse d'entraînement de la pompe » et « cylindrée de la pompe ». La vitesse d'entraînement peut être connue par le régime du moteur 18 et, éventuellement, par le capteur 31. Cette vitesse étant connue, l'inclinaison du plateau-came de la pompe 24 est commandée par tout moyen approprié (tel que les électrovalves 36A, 36B) pour que cette pompe ait une cylindrée qui, en fonction de sa vitesse d'entraînement, lui permette de fournir le débit de fluide souhaité.

Le véhicule est alors entraîné par la transmission hydraulique.

La vitesse réelle du véhicule est alors déterminée, par exemple par les capteurs de vitesse 29, et cette vitesse est comparée à la vitesse théorique. En fonction de cette comparaison, la cylindrée de la pompe est modifiée pour que la vitesse réelle du véhicule se rapproche de la vitesse cible. Par exemple, la cylindrée de la pompe est multipliée par un coefficient correspondant au rapport entre la vitesse théorique et la vitesse cible. Le schéma de la figure 2 montre une boucle de rétroaction, la commande de la cylindrée de la pompe étant en l'espèce asservie sur la vitesse réelle du véhicule ou, plus précisément, sur l'écart entre la vitesse réelle et la vitesse théorique.

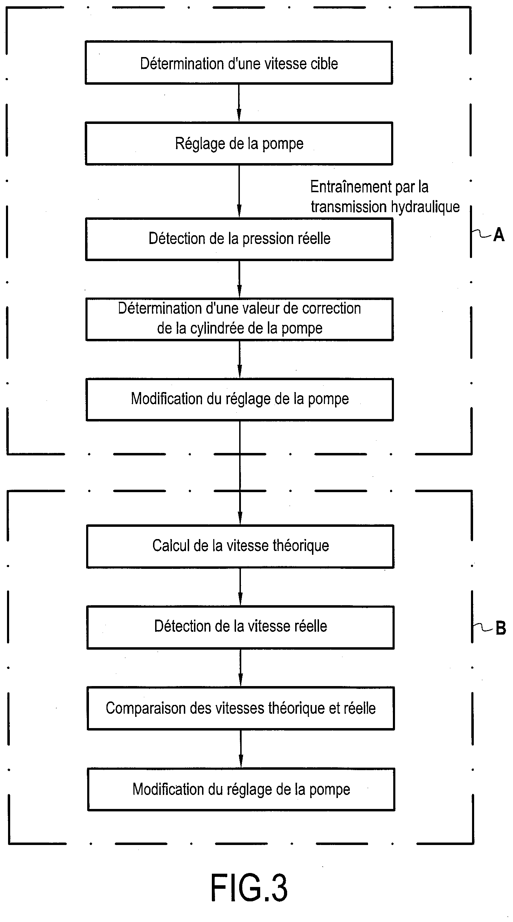

On décrit maintenant la figure 3 qui illustre l'exécution du procédé de commande de l'invention, une fois que le mode « contrôle basse vitesse » a été activé, par exemple via le bouton VR de l'interface 54.

On s'intéresse d'abord au bloc A de la figure 3. Tout d'abord, on détermine la vitesse cible du véhicule, par exemple via l'information de vitesse souhaitée reçue du capteur 55A. Ensuite, sur la base de cette vitesse cible, on calcule les paramètres de réglage de la pompe 24 et on effectue ce réglage comme précédemment décrit en référence au premier mode de réalisation.

Le véhicule est alors entraîné par la transmission hydraulique, et la pression aux bornes des moteurs est détectée par les capteurs 27 et transmise à l'unité de commande 50. On connait alors la haute pression qui, en mode traction, est la pression d'alimentation des moteurs. En mode retenue, par exemple pour descendre une pente ou un trottoir, la haute pression est la pression de refoulement des moteurs. L'unité de commande 50 peut alors comparer cette pression détectée à celles qui sont indiquées dans une table de correction, qui peut être entrée dans sa mémoire et qui est révélatrice du rendement volumétrique du circuit hydraulique ou, au moins, des moteurs hydrauliques, en fournissant le rendement volumétrique, c'est-à-dire le rapport entre le débit réel sortant des moteurs et le débit sortant de la pompe, pour différentes valeurs de pression. L'unité de commande détermine alors la modification qui doit être apportée à la cylindrée de la pompe pour, en fonction du rendement volumétrique à la pression détectée, obtenir une vitesse de sortie réelle qui se rapproche de la vitesse cible. En particulier, l'unité de commande définit une nouvelle cylindrée cible pour la pompe, qui correspond au rapport de sa cylindrée initiale au coefficient de rendement volumétrique figurant sur la table pour la pression réelle détectée. Pour déterminer la valeur de correction, l'unité de commande peut choisir, parmi les pressions de la table, celle qui est la plus proche de la pression réelle et retenir le coefficient de rendement correspondant, ou bien procéder par interpolation, pour calculer le coefficient de rendement à retenir à partir des coefficients de rendement pour les pressions indiquées dans la table, qui sont les plus proches de la pression réelle.

L'unité de commande 50 modifie ensuite la cylindrée de la pompe principale 24 pour rapprocher la vitesse réelle de la vitesse cible.

Le bloc B de la figure 3 illustre une variante dans laquelle, une fois le réglage de la pompe 24 modifié selon la procédure décrite en référence au bloc A, on réalise ensuite une commande par la vitesse selon le principe décrit ci-dessus en référence à la figure 2. En effet, on calcule la vitesse théorique du véhicule sur la base de la vitesse cible de sortie des moteurs hydrauliques, elle-même fonction du débit de la pompe 24 et de la cylindrée effective de ces moteurs. Par exemple par les capteurs de vitesse 29, on détermine alors la vitesse réelle du véhicule. On compare les vitesses réelle et théorique et on modifie les réglages de la pompe 24 pour que la vitesse réelle se rapproche de la vitesse théorique.

Pour sortir du mode « contrôle basse vitesse », le conducteur peut actionner une commande, par exemple le bouton OFF de l'interface 54 ou tout autre bouton annulant l'activation du bouton VR. Comme indiqué précédemment, on peut également en sortir automatiquement, en particulier lorsque l'unité de commande, par exemple via les capteurs de vitesse 29 ou par un système de type GPS, détecte que la vitesse réelle du véhicule est supérieure à une vitesse plafond prédéterminée, par exemple de l'ordre de 10 km/h, ou encore lorsque l'unité de commande détecte une variation significative de la vitesse souhaitée par le conducteur, par exemple à la suite d'un actionnement de forte amplitude de la commande d'accélération par ce dernier.

Comme indiqué précédemment, selon l'invention, on peut mettre en œuvre un mode de fonctionnement « avant-arrière » dans lequel, on inverse alternativement le sens de refoulement de la pompe 24 pour faire alternativement fonctionner les moteurs hydrauliques en marche avant et en marche arrière.

Dans chacune des phases avant et/ou arrière, on cherche à stabiliser la vitesse conformément à l'invention. Ainsi, le procédé qui vient d'être décrit en référence aux figures 2 et 3 peut être mis en œuvre dans les phases avant et/ou dans les phases arrière.

Cependant, la durée de chacune de ces phases est faible, par exemple de l'ordre de 2 s. Par conséquent, plutôt que de déterminer la la modification devant être apportée à la cylindrée de la pompe pour chaque nouvelle phase selon les méthodes de détermination qui ont été décrites, on peut, lors d'une nouvelle phase avant, respectivement arrière, conserver la correction déterminée pour une phase précédente avant, respectivement arrière et reprendre le même réglage de la pompe 24 (à son sens de refoulement près, si l'on réalise une phase arrière en reprenant le réglage utilisé pour une phase arrière ou vice-versa). On peut encore déterminer la modification devant être apportée à la cylindrée de la pompe selon les méthodes qui ont été décrites, seulement dans certaines des phases, par exemple une phase sur deux, en réutilisant, pour les autres phases, les modifications ainsi déterminées en dernier lieu. Dans la mesure où la durée des phases avant et arrière est en principe sensiblement la même, on peut par exemple choisir, pour réaliser une phase arrière, de réutiliser la modification déterminée pour la phase avant précédente.

On peut sortir du mode « avant-arrière » de la même manière qu'on sort du mode « contrôle basse vitesse ». Selon les cas, en sortant du mode « avant-arrière », on peut engager le mode « contrôle basse vitesse », jusqu'à ce que la difficulté du terrain soit passée.

Une fois que l'on est sorti du mode « contrôle basse vitesse », la transmission mécanique est en principe embrayée. La transmission hydraulique peut quant à elle passer en mode de fonctionnement d'assistance normale, être totalement désactivée ou être partiellement activée.

En général, la transmission hydraulique servant d'assistance à la transmission mécanique, elle est active en dessous d'un seuil limite d'application. Au-dessus de ce seuil, la transmission hydraulique peut passer automatiquement à l'état « désactivée » ou « partiellement activée », et l'interface utilisateur 54 peut en fonction de cela changer l'état des boutons ON, OFF et APV précités.

Comme indiqué dans la demande de brevet internationale n° WO2014/162103, la situation dans laquelle la transmission hydraulique est partiellement activée peut correspondre à une mise en mode de fonctionnement « sans couple » de cette dernière.

Pour rendre les moteurs 26A et 26B inactifs en mode « sans couple », on maintient la valve 34 en position II et, grâce à l'unité de commande 50, on régule la cylindrée de la pompe 24 en agissant sur les électrovalves 36A et 36B précitées de telle sorte que les pressions aux orifices d'alimentation 24A et d'échappement 24B de la pompe 24 soient sensiblement égales.

Pour permettre une telle régulation, on met à profit les deux capteurs de pression 27 précités, mesurant les pression P_{A} et P_{B} aux bornes des moteurs. Sur la base de ces valeurs de pression, l'unité de commande 50 fait varier et régule la valeur de la cylindrée de la pompe 24 de telle sorte que les pressions P_{A} et P_{B} deviennent égales. Cette régulation peut être faite par tout algorithme de contrôle adapté, en utilisant par exemple des PID ou autre.

Ainsi dans ce mode de régulation, le système utilise l'information de pression donnée par les capteurs de pression 27 pour déterminer la cylindrée de la pompe 24.

Par ailleurs, la plus basse de ces pressions (normalement P_{B} lorsque le véhicule se déplace en marche avant) est astreinte à être égale à la pression d'échange P_{E} par la valve d'échange 60.

Dans l'exemple précédent, l'invention a été illustrée par un mode de réalisation avec deux moteurs 26A et 26B placés en parallèle. L'invention peut naturellement être mise en œuvre avec tout nombre de moteurs, et quelle que soit leur configuration (en série, en parallèle, une combinaison de ces deux dispositions), dès lors que l'unité de commande détermine la vitesse de sortie du moteur d'entrainement 18 et pilote la cylindrée de la pompe principale 24 ainsi qu'il a été décrit.

Par exemple, comme indiqué dans la demande de brevet internationale n° WO2014/162103, on peut, alors que la transmission hydraulique est en activation partielle, faire en sorte que cette transmission ne produise pas de couple. Ceci est utile en dehors des situations d'embrayage ou d'aide au démarrage, ou dans toute situation dans laquelle l'assistance n'est pas requise.

Dans ce cas, l'unité de commande 50 peut déterminer la cylindrée de la pompe 24 pour que le couple de sortie des moteurs hydrauliques soit sensiblement nul, sur la base des informations de vitesse de rotation des roues ou des moteurs hydrauliques fournies par les capteurs 29, et des informations de vitesse de rotation du rotor de la pompe 24 fournies par le capteur 31. La cylindrée de la pompe est pour cela calculée de telle sorte que la vitesse de rotation des arbres de sortie des moteurs hydrauliques 26A, 26B, calculée à partir de la vitesse de rotation du rotor de la pompe 24 et des cylindrées respectives de la pompe et des moteurs, soit égale à la vitesse de rotation effective des arbres de sortie des moteurs 26A, 26B (c'est-à-dire la vitesse de rotation des roues 14A, 14B) telle que mesurée par les capteurs 29.

La vitesse de rotation de l'arbre de la pompe 24 conjointement avec la cylindrée de celle-ci, détermine en effet le débit de fluide refoulé par la pompe 24 vers les moteurs 26A,26B. De ce débit se déduit la vitesse de rotation des arbres de sortie des moteurs, compte tenu de la cylindrée de ceux-ci.

En choisissant une cylindrée de pompe qui rend la vitesse de rotation des arbres de sortie des moteurs 26A,26B égale à la vitesse de rotation des roues 14A, 14B, l'unité de commande 50 pilote la pompe 24 de telle sorte que les pressions de fluide aux orifices d'alimentation et d'échappement des moteurs 26A, 26B demeurent sensiblement égales, et que les moteurs 26A et 26B ne délivrent aucun couple sur leur arbre de sortie.

Bien entendu, la liaison entre l'unité de commande 50 et les différents organes qu'elle commande en leur transmettant une information ou dont elle reçoit une information, peut être réalisée par tout moyen approprié pour transporter de l'information, filaire ou autre.

On relève que l'invention a été décrite dans le cas particulier où la transmission hydraulique est une transmission d'assistance. Bien entendu, elle s'applique également au cas où il s'agit de la transmission principale du véhicule, le mode d'exécution décrit en référence à la figure 2, utilisant les capteurs appropriés, restant alors valables.

## Revendications

1. Procédé de commande d'un dispositif de transmission d'un véhicule, le dispositif comprenant une transmission hydraulique (20) ayant n moteurs hydrauliques (26A, 26B), n étant supérieur ou égal à 1, et une pompe (24) apte à être entraînée par un entrainement pour alimenter les moteurs hydrauliques en fluide, dans lequel on règle la pompe (24) pour qu'elle délivre un débit sortant tel que la vitesse de sortie théorique desdits n moteurs hydrauliques (26A, 26B) alimentés à ce débit sortant soit une vitesse cible, puis on détecte la pression de fluide à l'alimentation et/ou à l'échappement (30, 32) des moteurs hydrauliques, puis on modifie la cylindrée de la pompe (24) en fonction d'une table de correction tenant compte du rendement volumétrique des moteurs hydrauliques pour différentes valeurs de pression, pour que la vitesse de sortie réelle des moteurs hydrauliques se rapproche de la vitesse cible.

2. Procédé selon la revendication 1, **caractérisé en ce qu'**on calcule la vitesse théorique du véhicule sur la base de la vitesse cible de sortie des moteurs hydrauliques (26A, 26B), on compare ladite vitesse théorique à la vitesse réelle du véhicule et, sur la base de cette comparaison, on modifie la cylindrée de la pompe (24) pour que la vitesse réelle soit sensiblement égale à la vitesse théorique.

3. Procédé selon la revendication 1 ou 2, **caractérisé en ce qu'**on détermine la vitesse cible en fonction du degré d'actionnement d'une commande de vitesse (55A).

4. Procédé selon l'une quelconque des revendications 1 à 3, **caractérisé en ce qu'**on met en œuvre un mode de fonctionnement « avant-arrière » dans lequel, on inverse alternativement le sens de refoulement de la pompe (24) pour faire alternativement fonctionner les moteurs hydrauliques (26A, 26B) en marche avant et en marche arrière.

5. Procédé selon la revendication 4, **caractérisé en ce qu'**on émet un signal révélateur d'une anomalie de motricité du véhicule pouvant justifier la mise en œuvre du mode « avant-arrière ».

6. Procédé selon la revendication 4 ou 5, **caractérisé en ce qu'**on met automatiquement en œuvre le mode « avant-arrière » sur la base dudit signal.

7. Procédé selon l'une quelconque des revendications 1 à 6, **caractérisé en ce que**, le dispositif de transmission comprenant une transmission mécanique (16) reliée à un moteur d'entrainement (18) via un embrayage (18A), on assure l'entrainement de la pompe (24) par ledit moteur d'entrainement.

8. Procédé d'activation du procédé de commande selon l'une quelconque des revendications 1 à 7, **caractérisé en ce qu'**on met en œuvre ledit procédé de commande lorsque le moteur d'entrainement (18) est débrayé de la transmission mécanique.

9. Véhicule comprenant un dispositif de transmission comprenant une transmission hydraulique (20) ayant n moteurs hydrauliques (26A, 26B), n étant supérieur ou égal à 1, et une pompe (24) apte à être entrainée par un entrainement pour alimenter les moteurs hydrauliques en fluide, le dispositif de transmission étant configuré pour :
- que la pompe (24) soit réglée pour qu'elle délivre un débit sortant tel que la vitesse de sortie théorique desdits n moteurs hydrauliques (26A, 26B) alimentés à ce débit sortant soit une vitesse cible ;
- détecter la pression de fluide à l'alimentation et/ou à l'échappement (30, 32) des moteurs hydrauliques ;
- modifier la cylindrée de la pompe (24) en fonction d'une table de correction tenant compte du rendement volumétrique des moteurs hydrauliques pour différentes valeurs de pression, pour que la vitesse de sortie réelle des moteurs hydrauliques se rapproche de la vitesse cible.

## Patentansprüche

1. Verfahren zur Steuerung einer Getriebevorrichtung eines Fahrzeugs, wobei die Vorrichtung ein hydraulisches Getriebe (20), das n Hydraulikmotoren (26A, 26B) aufweist, wobei n größer oder gleich 1 ist, und eine Pumpe (24) umfasst, die dazu geeignet ist, durch einen Antrieb angetrieben zu werden, um die Hydraulikmotoren mit Fluid zu versorgen, wobei die Pumpe (24) so geregelt wird, dass sie eine solche Ausgabeströmung liefert, dass die theoretische Ausgabegeschwindigkeit der n Hydraulikmotoren (26A, 26B), die mit dieser Ausgabeströmung versorgt werden, eine Zielgeschwindigkeit ist, anschließend der Fluiddruck am Zulauf und/oder am Ablauf (30, 32) der Hydraulikmotoren erfasst wird, anschließend die Verdrängung der Pumpe (24) in Abhängigkeit von einer Korrekturtabelle modifiziert wird, die den volumetrischen Wirkungsgrad der Hydraulikmotoren für unterschiedliche Druckwerte berücksichtigt, damit die tatsächliche Ausgabegeschwindigkeit der Hydraulikmotoren sich an die Zielgeschwindigkeit annähert.

2. Verfahren nach Anspruch 1, **dadurch gekennzeichnet, dass** die theoretische Geschwindigkeit des Fahrzeugs auf Grundlage der Ziel-Ausgabegeschwindigkeit der Hydraulikmotoren (26A, 26B) berechnet wird, die theoretische Geschwindigkeit mit der tatsächlichen Geschwindigkeit des Fahrzeugs verglichen wird und, auf Grundlage dieses Vergleichs, die Verdrängung der Pumpe (24) modifiziert wird, so dass die tatsächliche Geschwindigkeit im Wesentlichen gleich der theoretischen Geschwindigkeit ist.

3. Verfahren nach Anspruch 1 oder 2, **dadurch gekennzeichnet, dass** die Zielgeschwindigkeit in Abhängigkeit von dem Betätigungsumfang einer Geschwindigkeitssteuerung (55A) bestimmt wird.

4. Verfahren nach einem der Ansprüche 1 bis 3, **dadurch gekennzeichnet, dass** ein Funktionsmodus "Vorwärts-Rückwärts" ausgeführt wird, bei welchem alternativ die Richtung der Förderung der Pumpe (24) umgekehrt wird, um die Hydraulikmotoren (26A, 26B) alternativ im Vorwärtslauf und im Rückwärtslauf arbeiten zu lassen.

5. Verfahren nach Anspruch 4, **dadurch gekennzeichnet, dass** ein Signal ausgegeben wird, das eine Antriebsanomalie des Fahrzeugs anzeigt, welche die Ausführung des Modus "Vorwärts-Rückwärts" rechtfertigen kann.

6. Verfahren nach Anspruch 4 oder 5, **dadurch gekennzeichnet, dass** der Modus "Vorwärts-Rückwärts" automatisch auf Grundlage des Signals ausgeführt wird.

7. Verfahren nach einem der Ansprüche 1 bis 6, **dadurch gekennzeichnet, dass** die Getriebevorrichtung ein mechanisches Getriebe (16) umfasst, das mit einem Antriebsmotor (18) über eine Kupplung (18A) verbunden ist, und der Antrieb der Pumpe (24) durch den Antriebsmotor sichergestellt wird.

8. Verfahren zur Aktivierung des Steuerungsverfahrens nach einem der Ansprüche 1 bis 7, **dadurch gekennzeichnet, dass** das Steuerungsverfahren ausgeführt wird, wenn der Antriebsmotor (18) von dem mechanischen Getriebe abgekoppelt wird.

9. Fahrzeug umfassend eine Getriebevorrichtung, die ein hydraulisches Getriebe (20), das n Hydraulikmotoren (26A, 26B) aufweist, wobei n größer oder gleich 1 ist, und eine Pumpe (24) umfasst, die dazu geeignet ist, durch einen Antrieb angetrieben zu werden, um die Hydraulikmotoren mit Fluid zu versorgen, wobei die Getriebevorrichtung ausgestaltet ist:
- so dass die Pumpe (24) so geregelt wird, dass sie eine solche Ausgabeströmung liefert, dass die theoretische Ausgabegeschwindigkeit der n Hydraulikmotoren (26A, 26B), die mit dieser Ausgabeströmung versorgt werden, eine Zielgeschwindigkeit ist,
- um den Fluiddruck am Zulauf und/oder am Ablauf (30, 32) der Hydraulikmotoren zu erfassen,
- um die Verdrängung der Pumpe (24) in Abhängigkeit von einer Korrekturtabelle zu modifizieren, die den volumetrischen Wirkungsgrad der Hydraulikmotoren für unterschiedliche Druckwerte berücksichtigt, damit die tatsächliche Ausgabegeschwindigkeit der Hydraulikmotoren sich an die Zielgeschwindigkeit annähert.

## Claims

1. A method for controlling a transmission device of a vehicle, the device comprising a hydraulic transmission (20) having n hydraulic motors (26A, 26B), n being greater than or equal to 1, and a pump (24) able to be driven by a drive for supplying the hydraulic motors with fluid, wherein the pump (24) is set so that it delivers an outflow rate such that the theoretical output speed of said n hydraulic motors (26A, 26B) supplied at this outflow rate is a target speed, then the fluid pressure at the supply and/or the exhaust (30, 32) of the hydraulic motors is detected, then the displacement of the pump (24) is modified according to a table of correction taking into account the volumetric efficiency of the hydraulic motors for different pressure values, so that the actual output speed of the hydraulic motors approaches the target speed.

2. The method according to claim 1, **characterized in that** the theoretical speed of the vehicle is calculated based on the target output speed of the hydraulic motors (26A, 26B), said theoretical speed is compared with the actual speed of the vehicle and, based on this comparison, the displacement of the pump (24) is modified so that the actual speed is substantially equal to the theoretical speed.

3. The method according to claim 1 or 2, **characterized in that** the target speed is determined as a function of the degree of actuation of a speed control (55A).

4. The method according to any one of claims 1 to 3, **characterized in that** a "forward-reverse" operating mode is implemented in which the direction of discharge of the pump (24) is alternately reversed to make the hydraulic motors (26A, 26B) alternately operate in forward gear and reverse gear.

5. The method according to claim 4, **characterized in that** a signal is emitted indicative of an anomaly in the driveability of the vehicle which may justify the implementation of the "forward-reverse" mode.

6. The method according to claim 4 or 5, **characterized in that** the "forward-reverse" mode based on said signal is implemented automatically.

7. The method according to any one of claims 1 to 6, **characterized in that**, as the transmission device comprises a mechanical transmission (16) connected to a drive motor (18) via a clutch (18A), the driving of the pump (24) is ensured by said drive motor.

8. A method for activating the control method according to any one of claims 1 to 7, **characterized in that** said control method is implemented when the drive motor (18) is disengaged from the mechanical transmission.

9. A vehicle comprising a transmission device comprising a hydraulic transmission (20) having n hydraulic motors (26A, 26B), n being greater than or equal to 1, and a pump (24) able to be driven by a drive for supplying the hydraulic motors with fluid, the transmission device being configured:
- so that the pump (24) is set so that it delivers an outflow rate such that the theoretical output speed of said n hydraulic motors (26A, 26B) supplied at this outflow rate is a target speed;
- to detect the fluid pressure at the supply and/or exhaust (30, 32) of the hydraulic motors;
- to modify the displacement of the pump (24) according to a correction table taking into account the volumetric efficiency of the hydraulic motors for different pressure values, so that the actual output speed of the hydraulic motors approaches the target speed.
